# EUROPÄISCHE PATENTSCHRIFT

(11) **EP 4 070 117 B1**
(45) Veröffentlichungstag und Bekanntmachung des Hinweises auf die Patenterteilung: **29.07.2026**
(21) Anmeldenummer: 20807735.4
(22) Anmeldetag: 16.11.2020
(51) Int. Cl.: G01P 3/489, G01D 21/00, H04L 67/12, G08C 19/00, H04B 3/00

(54) **RADINFORMATIONSÜBERTRAGUNGSVORRICHTUNG, RADINFORMATIONSÜBERTRAGUNGSVERFAHREN UND FAHRZEUG MIT RADINFORMATIONSÜBERTRAGUNGSVORRICHTUNG**
WHEEL INFORMATION TRANSFER APPARATUS, WHEEL INFORMATION TRANSFER METHOD AND VEHICLE HAVING WHEEL INFORMATION TRANSFER APPARATUS
APPAREIL DE TRANSFERT D'INFORMATIONS DE ROUE, PROCÉDÉ DE TRANSFERT D'INFORMATIONS DE ROUE ET VÉHICULE COMPRENANT UN APPAREIL DE TRANSFERT D'INFORMATIONS DE ROUE

(30) Priorität: 06.12.2019 DE 102019133440
(43) Veröffentlichungstag der Anmeldung: 12.10.2022
(73) Patentinhaber: KNORR-BREMSE Systeme für Nutzfahrzeuge GmbH, 80809 München (DE)
(72) Erfinder: KLUFTINGER, Andre, 63924 Kleinheubach (DE); WINDISCH, Andreas, 82008 Unterhaching (DE); LECHNER, Klaus, 91362 Pretzfeld (DE); WIEDER, Gerhard, 74354 Besigheim (DE); SCHMID, Karl-Heinz, 74354 Besigheim (DE); RAMMERT, Alexander, 70806 Kornwestheim (DE); THIERFELDER, Felix, 85715 Unterschleißheim (DE)
(74) Vertreter: Prüfer & Partner mbB Patentanwälte · Rechtsanwälte
(86) Internationale Anmeldenummer: PCT/EP2020/082280
(87) Internationale Veröffentlichungsnummer: WO 2021/110398

(56) Entgegenhaltungen:
- DE-A1- 102010 025 872
- DE-A1- 102017 125 562
- US-A1- 2013 073 250

## Beschreibung

Die Erfindung betriff eine Radinformationsübertragungsvorrichtung ein Radinformationsübertragungsverfahren und ein Fahrzeug mit Radinformationsübertragungsvorrichtung und betrifft insbesondere eine solche Vorrichtung und ein solches Verfahren zur Erfassung einer Raddrehzahl, die zusätzliche Informationen übertragen.

Im Stand der Technik, insbesondere bei Personenkraftwagen sind aktive Raddrehzahlsensoren bekannt, die die Drehzahl eines Rads erfassen und mittels Drehzahlpulsen über ein zweiadriges Kabel als Übertragungsmedium an eine Auswertungsvorrichtung, beispielsweise eine Steuervorrichtung für ein Antiblockiersystem übermitteln. Nach dem an sich bekannten AK-Protokolls des Arbeitskreises der Automobilindustrie können zusätzliche Informationen übertragen werden. Das AK-Protokoll ist ein Stromprotokoll bei dem der aktive Drehzahlsensor mit einer Spannung versorgt wird. Durch Variation des Sensorinnenwiderstandes und dadurch hervorgerufener Modulation des Stroms werden die Zusatzinformationen übertragen. Die übertragene Information wird neben der Drehzahl um Informationen wie Drehrichtung, Luftspaltreserve und eine Validierung des Signals erweitert. Hierbei werden durch Anforderungen an autonome Fahrfunktionen in Nutzfahrzeugen werden solche aus dem Personenkraftwaten bekannte Raddrehzahlsensoren zunehmend in Nutzfahrzeugen verbaut. Hierbei übersteigen die nutzfahrzeugtypischen Anforderungen die Anforderungen aus dem Personenkraftwagen. So ist beispielsweise die Übertragung eines Temperatursignals vom Sensor erwünscht, um eine heißgelaufene Bremse zu erkennen. Auch lassen sich über im Sensor gespeicherte Informationen beispielsweise Plausibilitätsprüfungen über einen im Steuergerät erfassten und gespeicherten Kilometerstand überprüfen und Manipulationen am Steuergerät ggf. aufdecken. Auch andere im Sensor gespeicherten Informationen wie eine Seriennummer lassen sich so bisher nicht auslesen.

Aus den Druckschriften DE 10 2014 216 295 A1 und WO 2015/039895 ist eine Erweiterung des AK-Protokolls bekannt, das ein Verfahren zum Erzeugen einer von einer Drehzahl abhängigen Sensorinformation mit einem Drehzahlsensor lehrt, wobei der Drehzahlsensor eingerichtet ist, in vorbestimmten Winkellagen eines sich mit der Drehzahl drehenden physikalischen Geberfeldes Drehzahlpulse auszugeben. Das Verfahren umfasst das Erzeugen eines von der Winkellage des physikalischen Geberfeldes abhängigen digitalen Winkelsignals, und das Ausgeben einer vorbestimmten Anzahl an höchstwertigen Bits des digitalen Winkelsignals als Sensorinformation. Diese Lehre zielt auf eine Änderung des AK-Protokolls ab, die eine höhere Dichte der Informationsübertragung bei niedrigen Geschwindigkeiten ermöglicht und erfordert nachteilhafterweise einen Austausch vorhandener Auswerteschaltungen, da diese nicht weiter benutzt werden können.

Die Druckschrift DE 10 2010 025 872 A1 offenbart ein Verfahren sowie eine Anordnung zur Übertragung von Sensorsignalen. Offenbart wird: - dass ein erster Sensor, insbesondere ein Drehzahlsensor, ein Wechselsignal liefert, das als Folge von Sensorpulsen und Pulspausen vorgegebener Dauer vorliegt, wobei in den Pulspausen als eine Bit-Folge Zusatzdaten übertragen werden und wobei die Bit-Folge mindestens ein freies Bit enthält, - dass eine binäre Informationssequenz mit Daten von mindestens einem weiteren Sensor erzeugt wird, die eine Übertragungslänge von mehreren Bits hat, und - dass die Daten des ersten Sensors und des mindestens einen weiteren Sensors durch eine gemeinsame Datenleitung übertragen werden, indem eine Verarbeitungseinheit die Informationssequenz auf mehrere zeitlich aufeinander folgende Bit-Folgen verteilt und das mindestens eine freie Bit der Zusatzdaten mit mindestens einem Bit der Informationssequenz (belegt. Somit wird die Informationssequenz sicher übertragen, auch wenn sie mehrere Bits enthält als in den Zusatzdaten freie Bits zur Verfügung stehen. Damit offenbart diese Druckschrift eine erste Radinformationsübertragungsvorrichtung mit einer Informationserfassungsvorrichtung, die eingerichtet ist, radbezogene Informationen zu erfassen oder zu speichern und eine zweite Radinformationsübertragungsvorrichtung mit einer zweiten Informationserfassungsvorrichtung, die eingerichtet ist, Informationen zu erfassen oder zu speichern, und eine Informationsübertragungsvorrichtung, die eingerichtet ist, die radbezogenen Informationen des ersten Sensors über ein Übertragungsmedium zu übertragen, wobei die Informationsübertragungsvorrichtung eingerichtet ist, die radbezogenen Informationen der ersten Radinformationsübertragungsvorrichtung parallel oder quasi-parallel zu übertragen, und die Informationsübertragungsvorrichtung eingerichtet ist, die Radinformationen der zweiten Radinformationsübertragungsvorrichtung innerhalb der parallelen oder quasi-parallelen Datenübertragung seriell zu übertragen.

Die Druckschrift DE 10 2017 125 562 A1 offenbart einen Signalgenerator, der einen Signalbereitsteller und eine Signalverarbeitungseinheit umfasst. Der Signalbereitsteller ist ausgebildet, um ein Sensorsignal bereitzustellen, das ein wiederholt detektiertes Ereignis anzeigt, das innerhalb unterschiedlicher Zeitintervalle auftritt. Die Signalverarbeitungseinheit ist ausgebildet, um ein Sensorsignal basierend auf dem Sensorsignal zu erzeugen. Das Sendesignal umfasst Ereignisinformationen, die das zeitliche Auftreten des Ereignisses repräsentieren, und zusätzliche Information, die zusätzliche Daten repräsentieren. Die Ereignisinformationen umfassen Pulse, die den detektierten Ereignissen zugeordnet sind, wobei die Pulse zeitlich innerhalb des Sendesignals getrennt sind, gemäß den unterschiedlichen Zeitintervallen von detektierten Ereignissen, sodass jedes Zeitintervall der unterschiedlichen Zeitintervalle einen Puls aufweist, der einem detektierten Ereignis zugeordnet ist.

Die Druckschrift US 2013/073250 A1 offenbart eine Sensoranordnung umfassend einen Geschwindigkeitssensor, der zumindest ein Sensorelement aufweist, sowie eine elektronische Kontrolleinheit, wobei der Geschwindigkeitssensor und die elektronische Kontrolleinheit mittels wenigstens einer Leitung miteinander verbunden sind, wobei der Geschwindigkeitssensor eine Signalverarbeitungsschaltung aufweist, welche so ausgebildet ist, dass diese aus dem Sensorelementausgangssignal zumindest ein digitales Frequenzsignal gewinnt, welches in einem Datenwort codiert ist und in zumindest einer ersten Speichereinheit gespeichert wird und an die elektronische Kontrolleinheit übertragen wird.

Es ist Aufgabe der Erfindung, die Nachteile aus dem Stand der Technik zu beseitigen und eine Lehre bereitzustellen, zusätzliche, für Nutzfahrzeuge relevante Radinformation zu übertragen.

Die Aufgabe wird gelöst nach der Lehre gemäß dem Radinformationübertragungsvorrichtungsanspruch 1, dem Radinformationübertragungsverfahrensanspruch 7 und dem Fahrzeuganspruch 13. Vorteilhafte Weiterbildungen sind Gegenstand der abhängigen Ansprüche.

Die erfindungsgemäße Radinformationübertragungsvorrichtung umfasst unter anderem eine Informationserfassungsvorrichtung, die eingerichtet ist, radbezogene Informationen zu erfassen oder zu speichern, und eine Informationsübertragungsvorrichtung, die eingerichtet ist, die radbezogene Information über ein Übertragungsmedium zu übertragen, wobei die Informationsübertragungsvorrichtung eingerichtet ist, mindestens einen ersten Teil der radbezogenen Informationen parallel oder quasi-parallel zu übertragen, und wobei die Informationsübertragungsvorrichtung eingerichtet ist, den ersten Teil der radbezogenen Information oder einen zweiten Teil der radbezogenen Information innerhalb der parallelen oder quasi-parallelen Datenübertragung seriell zu übertragen.

Hierbei ist insbesondere die Radinformationsübertragungsvorrichtung ein aktiver Drehzahlsensor, der eingerichtet ist, den ersten Teil der Radinformation mittels des AK-Protokolls zu übertragen und den ersten Teil oder den zweiten Teil der Radinformation seriell zu übertragen.

Dadurch ist es möglich neben der über das AK-Protokoll übertragenen Information, beliebige weitere Information zu übermitteln, die durch einen Drehzahlsensor erfasst werden kann.

Das erfindungsgemäße Radinformationsübertragungsverfahren weist unter anderem folgende Schritte auf: Erfassen oder Speichern von Radinformation durch eine Informationserfassungsvorrichtung einer Radinformationsübertragungsvorrichtung, Übermitteln eines ersten Teils der Radinformation mittels einer Informationsübertragungsvorrichtung, wobei die Übermittlung parallel oder quasiparallel erfolgt, Übermitteln des ersten Teils der Radinformation oder eines zweiten Teils der Radinformation mittels der Informationsübertragungsvorrichtung, wobei die Übermittlung innerhalb der parallelen oder quasiparallelen Übermittlung seriell erfolgt.

Offenbart ist ferner ein Kraftfahrzeug, insbesondere Nutzkraftfahrzeug oder Lastkraftwagen mit einer Radinformationsübertragungsvorrichtung nach einem der Radinformationsübertragungsvorrichtungsansprüche

Die Erfindung wird nachfolgend mit einem Ausführungsbeispiel anhand der Figuren beschrieben.
Fig. 1 zeigt eine schematische Ansicht eines Fahrzeuges mit der erfindungsgemäßen Radinformationsübertragungsvorrichtung.
Fig. 2 zeigt eine schematische Ansicht einer der Radinformationsübertragungsvorrichtungen in der Fahrdynamikregelung der Fig. 1.
Fig. 3 zeigt ein Pulssignal der Radinformationsübertragungsvorrichtung aus Fig. 1 **Fig. 1** zeigt eine schematische Ansicht eines Fahrzeuges 2, beispielsweise ein Nutzfahrzeug mit einer bekannten Fahrdynamikregelung.

Das Fahrzeug 2 umfasst ein Chassis 4 und beispielsweise zwei Achsen mit vier Räder 6. Alternativ kann das Fahrzeug mehr als zwei Achsen und eine entsprechende höhere Anzahl an Rädern aufweisen oder mit einem geschleppten Anhänger versehen sein oder aus einer Sattelzugmaschine und einem Sattelauflieger bestehen, wobei die Elemente jeweils eigene Achsen und Räder aufweisen. Jedes Rad 6 kann über eine ortsfest am Chassis 4 befestigte Bremse 8 gegenüber dem Chassis 4 gebremst werden, um eine Bewegung des Fahrzeuges 2 zu verlangsamen.

Dabei können die Räder 6 des Fahrzeuges 2 in bekannter Weise ihre Bodenhaftung verlieren und sich das Fahrzeug 2 sogar von einer, beispielsweise über ein nicht weiter gezeigtes Lenkrad vorgegebenen Trajektorie durch Untersteuern oder Übersteuern wegbewegt. Dies wird durch an sich bekannte Regelkreise wie Antiblockiersystem und Fahrdynamikregelung vermieden.

In der vorliegenden Ausführung weist das Fahrzeug 2 dafür Radinformationsübertragungsvorrichtungen 10 an den Rädern 6 auf, die eine Drehzahl 12 der Räder 6 erfassen. Ferner weist das Fahrzeug 2 einen Inertialsensor 14 auf, der Fahrdynamikdaten 16 des Fahrzeuges 2 erfasst, die beispielsweise eine Nickrate, eine Wankrate, eine Gierrate, eine Querbeschleunigung, eine Längsbeschleunigung oder eine Vertikalbeschleunigung in umfassen können.

Basierend auf den erfassten Drehzahlen 12 und Fahrdynamikdaten 16 kann eine Auswertevorrichtung in Form eines Reglers 18 in bekannter Weise bestimmen, ob das Fahrzeug 2 auf der Fahrbahn rutscht oder sogar von der oben genannten vorgegebenen Trajektorie abweicht und entsprechend mit einem an sich bekannten Reglerausgangssignal 20 darauf reagieren. Das Reglerausgangssignal 20 kann dann von einer Stelleinrichtung 22 verwendet werden, um mittels Stellsignalen 24 Stellglieder, wie die Bremsen 8 anzusteuern, die auf das Rutschen und die Abweichung von der vorgegebenen Trajektorie in an sich bekannter Weise reagieren.

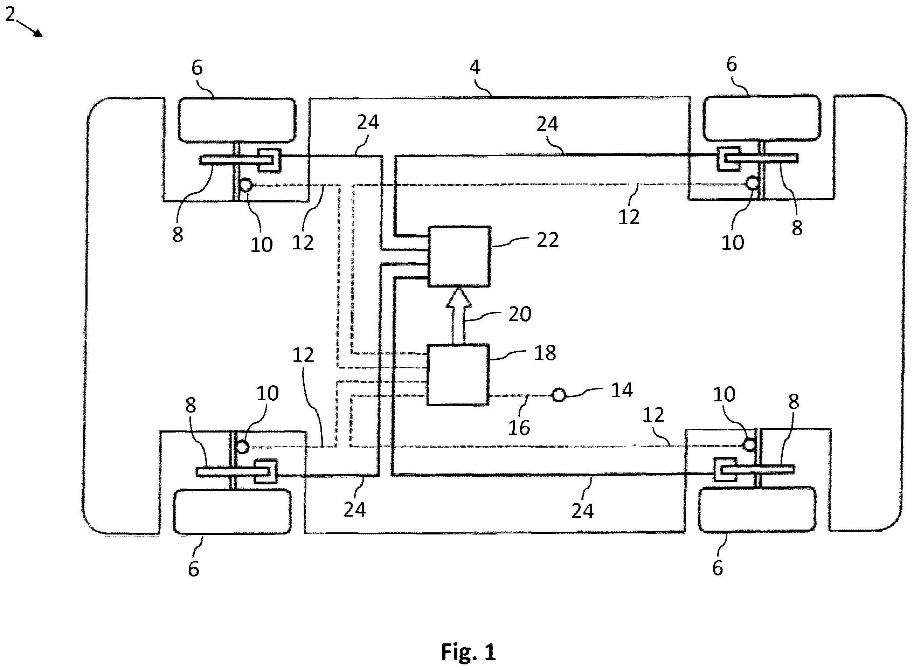

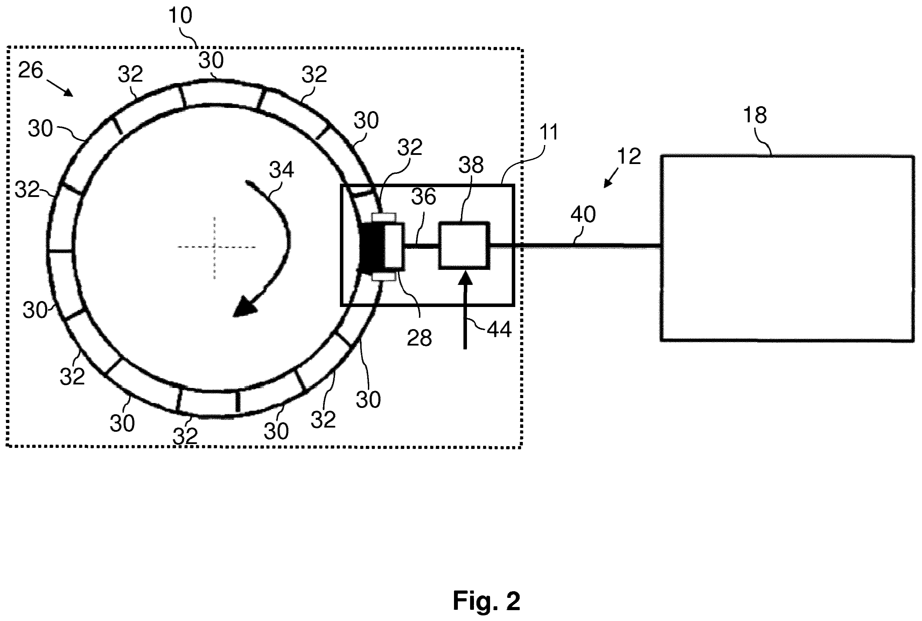

**Fig. 2** zeigt eine schematische Ansicht einer der Radinformationsübertragungsvorrichtungen 10 in der Fahrdynamikregelung der Fig. 1.

Eine Radinformationsübertragungsvorrichtung 10 umfasst einen Drehzahlsensor 1 und ist in der vorliegenden Ausführung als aktiver Drehzahlsensor ausgeführt, der eine drehfest am Rad 6 befestigte Encoderscheibe 26 und einen ortsfest zum Chassis 4 befestigen Lesekopf 28 umfasst. Im weiteren Verlauf der Beschreibung wird auf eine magnetische Encoderscheibe 26 Bezug genommen. Es können aber ebenso ferromagnetische Encoder oder Polräder zum Einsatz kommen, wie sie bisher bei passiven Drehzahlsensoren Anwendung finden. Der relevante technische Unterschied besteht darin, dass in besagtem Fall das erforderliche magnetische Feld durch einen hinter dem Lesekopf 28 fest verbauten Magneten erzeugt wird.

Die Encoderscheibe 26 besteht in der vorliegenden Ausführung aus aneinandergereihten Magnetnordpolen 30 und Magnetsüdpolen 32, die gemeinsam ein nicht weiter dargestelltes Gebermagnetfeld erregen. Dreht sich die am Rad 6 befestigte Encoderscheibe 26 mit diesem in eine Drehrichtung 34, dreht sich das Gebermagnetfeld so mit. Der Lesekopf 28 ist in der vorliegenden Ausführung ein magnetostriktives Element, das in Abhängigkeit der Winkellage des vom Encoderrad 26 erregten Gebermagnetfeldes seinen elektrischen Widerstand ändert.

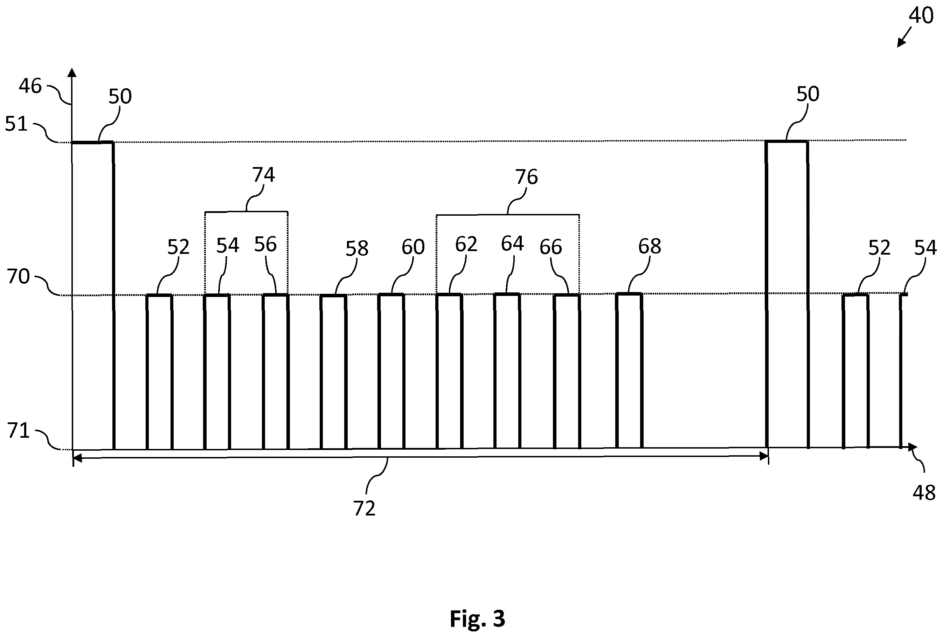

Zur Erfassung der Drehzahl 12 wird die Änderung der Winkellage des Encoderrades 26 und damit die Änderung des elektrischen Widerstandes des Lesekopfes 28 erfasst. Die Widerstandsänderung erzeugt ein Signal mit zur Anzahl der Magnetnordpole 30 und Magnetsüdpole 32 korrelierenden steigenden und fallenden Flanken. Dazu kann der Lesekopf 28 in bekannter Weise an eine nicht weiter dargestellte Widerstandsmessschaltung, wie beispielsweise eine bekannte Brückenschaltung angeschlossen werden. In Abhängigkeit des elektrischen Widerstandes des Lesekopfes 28 wird in der Widerstandsmessschaltung ein periodisches Ausgangssignal, nachstehend Drehzahlgebersignal 36 genannt, erzeugt. Basierend auf dem Drehzahlgebersignal 36, kann in bekannter Weise in einer dem Lesekopf 28 nachgelagerten Signalaufbereitungsschaltung 38, ein von der Drehzahl 12 abhängiges und in Fig. 3 gezeigtes schematisches Pulssignal 40 erzeugt und an den Regler 18 ausgegeben werden. Die Radinformationsvorrichtung 10 beinhaltet ferner eine elektronische Datenverarbeitungsvorrichtung 44, die weitere Informationen, wie eine Bauteiltemperatur erfassen und Informationen wie die Temperatur, eine Seriennummer oder einen Schlüssel und weitere Informationen speichern und übermitteln kann. Die Datenverarbeitungsvorrichtung 44 ist im Ausführungsbeispiel optional in dem Drehzahlsensor 11 vorgesehen.

**Fig. 3** zeigt das Pulssignal 40 in Form von Stromwerten 46 über die Zeit 48.

Das Pulssignal 40 trägt die Informationen über die Drehzahl 12 als Geschwindigkeitspulse 50 mit einem ersten Pulslevel 51, der nachstehend High-Pulslevel 51 genannt wird. Diese Geschwindigkeitspulse 50 werden mit höchster Priorität übertragen, was heißt, dass bei einer kürzeren Periodendauer 72 die Übertragung eines Geschwindigkeitspulses 50 die Übertragung aller anderen Informationen zurückgestellt oder abgebrochen wird.

Neben den Geschwindigkeitspulsen 50 wird in das Pulssignal 40 mindestens ein weiterer Informationspuls 52 bis 68 eingetragen, der abhängig von der zu übertragenden Information beispielsweise ein zweites Puls-Level 70, das nachstehend Medium-Pulslevel 70 genannt wird, oder ein drittes Pulslevel 71, das nachstehend Low-Pulslevel 71 genannt wird, aufweisen kann. In der Fig. 3 sind der Übersichtlichkeit halber alle Informationspulse 52 bis 68 mit dem Medium-Pulslevel 70 dargestellt. Ob ein Puls den logischen Wert 0 oder 1 annimmt wird anhand einer Manchester-Codierung umgesetzt. Dabei wird eine zur Pulsmitte auf das Medium-Pulslevel 70 steigende Flanke als logisch 1, eine zur Pulsmitte auf das Low-Pulslevel 71 fallende Flanke als logisch 0 gewertet In der vorliegenden Ausführung werden in das Pulssignal 40 nach dem Geschwindigkeitspuls 50 neun Informationspulse 52 bis 68 eingetragen, basierend auf dem an sich bekannten AK-Protokoll des Arbeitskreises der Automobilindustrie. Jeder Informationspuls 52 bis 68 trägt dabei ein Bit #0 bis #8. Das AK-Protokoll wurde herkömmlich bereits zur Überwachung eines in Fig. 2 nicht weiter sichtbaren Luftspaltes zwischen dem Encoderrad 26 und dem Lesekopf 28 verwendet, wobei die einzelnen Informationspulse 52 bis 68 nachstehend in der folgenden Weise belegt wurden: Aus der Spezifikation für das AK-Protokoll 4.0 ergeben sich zwei Gruppen mit frei nutzbaren Bits. Gruppe 1 mit dem Bezugszeichen 74 mit zwei Bits #1 und #2 mit den Bezugszeichen 54-56 und Gruppe 2 mit dem Bezugszeichen 76 mit drei Bits #5-#7 mit den Bezugszeichen 62-66. Nachstehende Tabelle zeigt bereits zusätzlich belegte Bits #1, #5-#7 welche häufig in der Automobilindustrie so belegt werden.

| Bit Nr. | Abkürzung | Bezeichnung | Kodierung |
|---|---|---|---|
| #0 | LR | Luftspaltreserve | 0 = in Ordnung; 1 = Fehler |
| #1 | SLM | Gültigkeit Signalamplitude | |
| #2 | Frei | | |
| #3 | GDR | Gültigkeit der Drehrichtung | 0 = ungültig; 1 = gültig |
| #4 | DR | Drehrichtung | 0 = positiv; 1 = negativ |
| #5 | LM0 | Luftspaltreserve (LSB) | Bit mit niedrigstem Stellenwert |
| #6 | LM1 | Luftspaltreserve | |
| #7 | LM2 | Luftspaltreserve (MSB) | Bit mit höchstem Stellenwert |
| #8 | P | Parität gerade | Berechnet |

Im Fahrzeug laufen in einem Steuergerät, das nachstehend beispielshaft als der Regler 18 angenommen wird, in der Signalkette eines Raddrehzahlsensorsystems die Raddrehzahlen 12 aller Raddrehzahlensensoren 11 des Fahrzeuges 2 zusammen und können neben dem Steuergerät 18 für eine Vielzahl von weiteren Fahrzeugsystemen aufbereitet und zur Verfügung gestellt werden.

Diese aufgezählten Informationen in Form von neun Bits werden als ein Datenpaket nach dem Geschwindigkeitspuls 50 durch Variation des Innenwiderstandes und dadurch hervorgerufener Modulation des Stroms bei jeder Zahnflanke des Endocerrades 26 quasiparallel übertragen. Hierbei bedeutet parallele Übertragung, dass jedes Bit des Datenpakets einer bestimmten Information zugeordnet ist und alle Bits gleichzeitig übertragen werden. Quasiparallele Übertragung bedeutet, dass jedes Bit des Datenpakets einer bestimmten Information zugeordnet ist und alle Bits auf Datenpaketebene gleichzeitig übertragen werden, auch wenn die Übertragung des Datenpakets sequentiell erfolgt. Dies gilt insbesondere wenn wie beim AK-Protokoll, die Bits #0 bis #8 als eigene Datenkanäle betrachtet werden, die Datenkanäle in einem synchronen Zeitmultiplexverfahren übertragen werden. Parallele und quasiparallele Übertragung haben gemein, dass jedes Bit grundsätzlich fest mit einer Information verknüpft ist.

Bei einem im Nutzfahrzeug üblicherweise verbauten Encoderrad 26 mit 100 Magnetnordpolen 30 und 100 Magnetsüdpolen 32 sind bei jeder Radumdrehung mit jeder steigenden bzw. fallenden Signalflanke, also 200 Datenpate übertragbar.

Im AK-Protokoll ist im Datenpaket das Bit #2 unbenutzt. Als lediglich ein Bit im quasiparallelen Datenpaket ist die übertragbare Information begrenzt. Im Ausführungsbeispiel wird daher dieses Bit #2 als serieller Datenübertragungskanal verwendet. Sequentielle Datenübertragung bedeutet, dass ein Bit keiner festen Bedeutung zugeordnet ist und sich die übertragene Information aus den jeweiligen Bits #2 mehrerer konsekutiv übertragenen Datenpakete zusammensetzt. Im Ausführungsbeispiel bleibt das AK-Protokoll ansonsten unberührt. Bei Nutzfahrzeugen wird der zu erwartende Frequenzbereich mit der das serielle Protokoll übertragen wird zwischen 3 und 900 Hz liegen. Der Drehzahlsensor 11 verfügt üblicherweise ferner über eine Stillstandserkennung und liefert ab einer geringeren Geschwindigkeit jeweils nach 150 ms ein Stillstandssignal. Dies entspricht einer Frequenz von etwa 3,3 Hz. Die Kommunikationsgeschwindigkeit ist je nach Drehzahl des Rades variabel. Ein Bereich von 0 Hz bis 2000 Hz ist sensorseitig möglich. Je schneller sich das Rad dreht, desto schneller kommt der nächste Geschwindigkeitsimpuls. Das Datenpaket des AK-Protokolls wird entsprechend abgeschnitten, wenn der nächste Geschwindigkeitsimpuls vor Beendigung der Übermittlung des Datenpakets erfolgt. Das letzte Bit #8, das Parity Bit wird entsprechend schon früher abgeschnitten - bei etwa 900 Hz (ca. 100 km/h). Bis es zu einer Kürzung aller Bits bis zum Bit #2 kommt sind etwa 2000 Hz (>200km/h) nötig. Somit stehen während der normalen Betriebsfahrt eines LKWs (und der meisten PKWs) alle Bits zur Verfügung. Über das Parity Bit lassen sich alle übertragenen Bits auf Fehler prüfen. Somit ist auch über die erfindungsgemäße serielle Kommunikation sichergestellt, dass die übertragene Information valide ist. Die serielle Kommunikation ist über das Parity Bit plausibilisiert. Ist die Geschwindigkeit gering, so ist auch der serielle Datenstrom langsamer. Um dem entgegenzuwirken, kann hier eine Informationsübertragung mit variabler Geschwindigkeit angewandt werden. Bei langsamer Geschwindigkeit oder Stillstand ist aus Sicht der Erfinder nur die Übertragung der Temperatur sinnvoll. Geschwindigkeitsabhängig können so mehr oder weniger Informationsblöcke übertragen werden.

Herkömmlicherweise speichert der Drehzahlsensor 11 eine aus 80 Bit bestehende Seriennummer und erfasst eine Bauteiltemperatur von -40°C bis +210 in einem Wert mit 8 Bit.

Im Ausführungsbeispiel ist ein über das Bit #2 übertragenes serielles Datenübertragungsprotokoll dergestalt implementiert, dass eine Übertragungssequenz mit einer Initialisierungsbitfolge erfolgt. Im Ausführungsbeispiel besteht die Initialisierungsbitfolge aus einem 7 Bit langen Wert, der immer die Form "010101" (2A HEX).

Daraufhin folgt ein 7 Bit langer Typ-Wert, über den die zu übertragende Information spezifiziert wird. So zeigt beispielsweise der Wert "1010100" die nachfolgende Übertagung der Temperatur und der Wert "01010011" die nachfolgende Übertragung der Seriennummer an.

Daraufhin folgt ein 7 Bit langer Längen-Wert, der die Länge in Bit der zu übertragenden Information anzeigt. Bei der Übertragung der Temperatur ist ein 8 Bit langer Wert zu übertragen, also der Wert "0001000" anzugeben. Bei der Übertagung der Seriennummer ist ein 80 Bit langer Wert zu übertragen, also hier der Wert "1010000".

Daraufhin erfolgt in einem Daten-Wert die Übertragung der eigentlichen Information in der angekündigten Länge.

Mit diesem Protokoll sind Nutzdaten mit einer Länge von 0 bis zu 128 Bit möglich. Einschließlich der Kopfinformationen mit einer Länge von 21 Bit hat eine Übertragungssequenz eine Länge von 21 bis 149 Bit und ist bei einem Drehzahlsensor 10 mit 200 Signalflanken innerhalb einer Radumdrehung übertragen. Im Minimalfall, d.h. beim Radstillstand beträgt die Übertragungsrate 6,6 Bit/s. Die Übertragungsdauer einer Übertragungssequenz beträgt daher 3,15s bis 22.35s. In einer vorteilhaften Weiterbildung des Ausführungsbeispiels werden bei geringen Drehzahlen lediglich kurze Übertragungssequenzen wie beispielsweise solche zur Temperatur übermittelt (<4,35s).

Im Ausführungsbeispiel sind folgende Übertragungsinformationen definiert:

| Informationsart | Bitfolge | Länge (Bit) |
|---|---|---|
| Seriennummer | 1010011 (S) | 80 |
| Temperatur | 1010100 (T) | 8 |
| Kundenspeicherbereich | 1001011 (K) | 112 |
| Schlüssel | 1010000 (P) | 128 |
| Magnetfeldstärke | 1001101 (M) | 8 |
| Sensortyp | 1001110 (N) | 24 |
| Debuginformation | 1000100 (D) | 128 |

In einer vorteilhaften Weiterbildung des Ausführungsbeispiels wird die Datenübertragung von Typ-Wert, Längen-Wert und Datenwert verschlüsselt. Hierzu kann ein Public/Private Key System eingesetzt werden, bei dem dem Regler 18 der Public Key des Drehzahlsensors bekannt ist, oder bei dem der Drehzahlsensor mittels einer Übertragungssequenz den verwendeten Public Key mitteilt.

Die serielle Datenübertragung kann durch einen Überprüfungswert abgeschlossen werden, beispielsweise einem CRC-Wert, der eine Plausibilitätsprüfung der seriellen Datenübertragung erlaubt.

Als Schutz kann den Nachrichten eine Zahl angehängt werden. Der Empfänger erkennt nur Nachrichten mit der aktuell höchsten laufenden Zahl an. Erfindungsgemäß kann die laufende Zahl z.B. eine Laufzeit des Sensors oder auch ein zurückgelegter Weg sein. So gibt es eine Verbesserung hinsichtlich einer Verschlüsselung der Kommunikation und einer Information über Laufzeit oder -weg. Diese Information kann zudem bei Reklamationen und bei Plausibilitätsprüfung eines Tachographen herangezogen werden.

In einer vorteilhaften Weiterbildung des Ausführungsbeispiels wird im AK-Protokoll nicht nur das Bit #2 als serieller Übertragungskanal verwendet, sondern beispielsweise auch die Bits #1 oder #5-#7. Diese Bits sind laut AK-Protokoll Revision 4.0 frei zuweisbar.

Der Regler 18 ist softwareseitig so angepasst, dass er die seriell übertragenen Informationen erfassen und auswerten kann. Der erfindungsgemäße Sensor ist jedoch auch mit einem herkömmlichen Regler 18 einsetzbar, wobei hier die seriell übertragene Information ignoriert wird und das System ansonsten funktionsfähig bleibt.

Das Ausführungsbeispiel ist lediglich als beispielhafte Ausgestaltung der Erfindung wie sie durch die Ansprüche definiert ist vorgesehen und stellt keine Einschränkung der durch die Ansprüche definierten Erfindung dar. Für den Fachmann erkennbar sind im Rahmen des Schutzbereichs der Ansprüche Ausgestaltungen möglich, die vom Ausführungsbeispiel abweichen können.

In der Beschreibung sind die Terme "und", "oder" und "entweder ... oder" als Junktor in der Bedeutung der logischen Konjunktion (mathematisches UND), als Junktor in der Bedeutung der logischen Adjunktion (mathematisches ODER, oft auch "und/oder") bzw. als Junktor in der Bedeutung der logischen Kontravalenz (mathematisches Exklusiv-ODER) verwendet.

In der Beschreibung oder den Ansprüchen angegebene Verfahrensschritte dienen lediglich der Auflistung der erforderlichen Verfahrensschritte. Sie implizieren nur dort eine Reihenfolge, wo die Reihenfolge explizit angegeben ist oder sich für den Fachmann als notwendig ergibt. Insbesondere Impliziert die Auflistung keine abschließende Aufzählung.

### BEZUGSZEICHENLISTE

- 2: Nutzfahrzeug
- 4: Chassis
- 6: Rad
- 8: Bremse
- 10: Radinformationübertragungsvorrichtung
- 11: Drehzahlsensor
- 12: Drehzahl
- 14: Inertialsensor
- 16: Fahrdynamikdaten
- 18: Regler
- 20: Reglerausgangsignal
- 22: Stelleinrichtung
- 24: Stellsignal
- 26: Encoderscheibe
- 28: Lesekopf
- 30: Magnetnordpol
- 32: Magnetsüdpol
- 34: Drehrichtung
- 36: Drehzahlgebersignal
- 38: Signalaufbereitungsschaltung
- 40: Pulssignal
- 44: Datenverarbeitungsvorrichtung
- 46: Stromwert
- 48: Zeit
- 50: Geschwindigkeitspuls
- 51: High-Pulslevel
- 52-68: Informationspulse
- 70: Medium-Pulslevel
- 71: Low-Pulslevel
- 72: Periodendauer
- 74: Gruppe 1
- 76: Gruppe 2

## Patentansprüche

1. Radinformationübertragungsvorrichtung (10) mit
einer Informationserfassungsvorrichtung (26, 28, 44), die eingerichtet ist, radbezogene Informationen zu erfassen oder zu speichern, und
einer Informationsübertragungsvorrichtung (44, 36, 38), die eingerichtet ist, die radbezogene Information über ein Übertragungsmedium zu übertragen,
wobei die Informationsübertragungsvorrichtung eingerichtet ist, mindestens einen ersten Teil der radbezogenen Informationen parallel, so dass jedes Bit eines Datenpakets einer bestimmten Information zugeordnet ist und alle Bits gleichzeitig übertragen werden, oder quasi-parallel, so dass jedes Bit des Datenpakets einer bestimmten Information zugeordnet ist und alle Bits auf Datenpaketebene gleichzeitig übertragen werden, auch wenn die Übertragung des Datenpakets sequentiell, also wenn ein Bit keiner festen Bedeutung zugeordnet ist und sich die übertragene Information aus den jeweiligen Bits mehrerer konsekutiv übertragenen Datenpakete zusammensetzt, erfolgt, zu übertragen,
wobei die Informationsübertragungsvorrichtung eingerichtet ist, diesen ersten Teil der radbezogenen Information oder einen zweiten Teil der radbezogenen Information innerhalb der parallelen oder quasi-parallelen Datenübertragung seriell zu übertragen, und
wobei die Informationsübertragungsvorrichtung (44, 36, 38) eingerichtet ist, die serielle Datenübertragung in der Form vorzunehmen, dass eine Übertragungssequenz aus einer Initialbitfolge, die einen Datenübertragungsbeginn anzeigt, einem Typ-Wert, der den zu übertagenden Datentyp anzeigt und einem Längen-Wert, der eine Länge der zu übertragenden Datennutzlast anzeigt, besteht.

2. Die Radinformationsübertragungsvorrichtung (10) nach Anspruch 1, wobei die Radinformationsübertragungsvorrichtung ein aktiver Drehzahlsensor ist, der eingerichtet ist, den ersten Teil der Radinformation mittels des AK-Protokolls zu übertragen und den ersten Teil oder den zweiten Teil der Radinformation seriell zu übertragen.

3. Die Radinformationsübertragungsvorrichtung (10) nach einem der vorhergehenden Ansprüche, wobei der erste Teil der Radinformation eine Luftspaltreserve, eine Signalamplitudengültigkeit, eine Drehrichtungsgültigkeit, eine Drehrichtung oder Paritätsinformation ist und der zweite Teil der Radinformation eine Sensorseriennummer, eine Bauteiltemperatur, ein Chiffrierschlüssel, Kundeninformation oder Sensorinformation ist.

4. Die Radinformationsübertragungsvorrichtung (10) nach einem der vorhergehenden Ansprüche, wobei die Informationsübertragungsvorrichtung (44, 36, 38) eingerichtet ist, den ersten Teil der Radinformation oder den zweiten Teil der Radinformation über einen oder mehrere serielle Übertragungskanäle zu übertragen.

5. Die Radinformationsübertragungsvorrichtung (10) nach dem vorhergehenden Anspruch, wobei die Informationsübertragungsvorrichtung (44, 36, 38) eingerichtet ist, die serielle Datenübertragung in der Form vorzunehmen, dass eine Übertragungssequenz zusätzlich eine Datennutzlast der im Längen-Wert angegebenen Länge oder eine Überprüfungsinformation insbesondere einen CRC-Wert aufweist.

6. Die Radinformationsübertragungsvorrichtung (10) nach einem der vorhergehenden Ansprüche, wobei die Informationsübertragungsvorrichtung (44, 36, 38) eingerichtet ist, den ersten Teil der Radinformation oder den zweiten Teil der Radinformation seriell und verschlüsselt zu übertragen.

7. Radinformationsübertragungsverfahren, das die Schritte aufweist:
Erfassen oder Speichern von Radinformation durch eine Informationserfassungsvorrichtung (26, 28, 44) einer Radinformationsübertragungsvorrichtung (10),
Übermitteln eines ersten Teils der Radinformation mittels einer Informationsübertragungsvorrichtung (44, 36, 38), wobei die Übermittlung parallel, so dass jedes Bit eines Datenpakets einer bestimmten Information zugeordnet ist und alle Bits gleichzeitig übertragen werden, oder quasiparallel, so dass jedes Bit des Datenpakets einer bestimmten Information zugeordnet ist und alle Bits auf Datenpaketebene gleichzeitig übertragen werden, auch wenn die Übertragung des Datenpakets sequentiell, also wenn ein Bit keiner festen Bedeutung zugeordnet ist und sich die übertragene Information aus den jeweiligen Bits mehrerer konsekutiv übertragenen Datenpakete zusammensetzt, erfolgt, erfolgt,
Übermitteln des ersten Teils der Radinformation oder eines zweiten Teils der Radinformation mittels der Informationsübertragungsvorrichtung (44, 36, 38), wobei die Übermittlung innerhalb der parallelen oder quasiparallelen Übermittlung seriell erfolgt wobei
die Übermittlung des ersten Teils der Radinformation oder eines zweiten Teils der Radinformation mittels serieller Datenübertragung die Schritte aufweist:
Übermitteln einer Initialbitfolge, die einen Datenübertragungsbeginn anzeigt,
Übermitteln eines Typ-Werts, der den zu übertagenden Datentyp anzeigt und
Übermitteln eines Längen-Werts, der eine Länge der zu übertragenden Datennutzlast anzeigt.

8. Das Radinformationsübertragungsverfahren nach dem vorhergehenden Verfahrensanspruch, wobei
die Radinformationsübertragungsvorrichtung ein aktiver Drehzahlsensor ist, und
die Übermittlung des ersten Teils der Radinformation mittels des AK-Protokolls erfolgt.

9. Das Radinformationsübertragungsverfahren nach einem der vorhergehenden Verfahrensansprüche, wobei der erste Teil der Radinformation eine Luftspaltreserve, eine Signalamplitudengültigkeit, eine Drehrichtungsgültigkeit, eine Drehrichtung oder Paritätsinformation ist und der zweite Teil der Radinformation eine Sensorseriennummer, eine Bauteiltemperatur, ein Chiffrierschlüssel, Kundeninformation oder Sensorinformation ist.

10. Das Radinformationsübertragungsverfahren nach einem der vorhergehenden Verfahrensansprüche, wobei die Übermittlung des ersten Teils der Radinformation oder des zweiten Teils der Radinformation über einen oder mehrere serielle Übertragungskanäle erfolgt.

11. Das Radinformationsübertragungsverfahren nach dem vorhergehenden Verfahrensanspruch, wobei die Übermittlung des ersten Teils der Radinformation oder eines zweiten Teils der Radinformation mittels serieller Datenübertragung ferner die Schritte aufweist:
Übermitteln einer Datennutzlast der im Längen-Wert angegebenen Länge oder
Übermitteln einer Überprüfungsinformation insbesondere einen CRC-Werts.

12. Das Radinformationsübertragungsverfahren nach einem der vorhergehenden Verfahrensansprüche, wobei die Übermittlung des ersten Teils der Radinformation oder eines zweiten Teils der Radinformation mittels serieller Datenübertragung verschlüsselt erfolgt.

13. Kraftfahrzeug, insbesondere Nutzkraftfahrzeug oder Lastkraftwagen mit einer Radinformationsübertragungsvorrichtung (10) nach einem der Radinformationsübertragungsvorrichtungsansprüche.

## Claims

1. A wheel information transfer apparatus (10) having
an information detection apparatus (26, 28, 44), which is designed to detect or store wheel-related information, and
an information transfer apparatus (44, 36, 38), which is designed to transfer the wheel-related information over a transfer medium,
wherein the information transfer apparatus is designed to transfer at least a first portion of the wheel-related information parallel, such that each bit of a data packet is assigned to a specific item of information and all bits are transferred simultaneously, or quasi-parallel, such that each bit of the data packet is assigned to a specific item of information and all bits are transferred simultaneously at data packet level, even if the data packet is transferred sequentially, that is to say if a bit is not assigned a fixed meaning and the transferred information is composed of the respective bits of a plurality of consecutively transferred data packets,
wherein the information transfer apparatus is designed to transfer this first portion of the wheel-related information or a second portion of the wheel-related information serially within the parallel or quasi-parallel data transfer, and
wherein the information transfer apparatus (44, 36, 38) is designed to perform the serial data transfer in such a form that a transfer sequence consists of an initial bit sequence, which indicates a data transfer start, a type value, which indicates the data type to be transferred, and a length value, which indicates a length of the data payload to be transferred.

2. The wheel information transfer apparatus (10) as claimed in claim 1, wherein the wheel information transfer apparatus is an active rotation speed sensor, which is designed to transfer the first portion of the wheel information by means of the AK protocol and to transfer the first portion or the second portion of the wheel information serially.

3. The wheel information transfer apparatus (10) as claimed in any one of the preceding claims, wherein the first portion of the wheel information is an air gap reserve, a signal amplitude validity, a direction of rotation validity, a direction of rotation or parity information, and the second portion of the wheel information is a sensor serial number, a component part temperature, a cipher key, customer information or sensor information.

4. The wheel information transfer apparatus (10) as claimed in any one of the preceding claims, wherein the information transfer apparatus (44, 36, 38) is designed to transfer the first portion of the wheel information or the second portion of the wheel information over one or more serial transfer channels.

5. The wheel information transfer apparatus (10) as claimed in the preceding claim, wherein the information transfer apparatus (44, 36, 38) is designed to perform the serial data transfer in such a form that a transfer sequence additionally has a data payload of the length specified in the length value or a check information item, in particular a CRC value.

6. The wheel information transfer apparatus (10) as claimed in any one of the preceding claims, wherein the information transfer apparatus (44, 36, 38) is designed to transfer the first portion of the wheel information or the second portion of the wheel information serially and in encoded form.

7. A wheel information transfer method, which has the following steps:
detecting or storing wheel information by means of an information detection apparatus (26, 28, 44) of a wheel information transfer apparatus (10),
transmitting a first portion of the wheel information by means of an information transfer apparatus (44, 36, 38), wherein the transmission takes place parallel, such that each bit of a data packet is assigned to a specific item of information and all bits are transferred simultaneously, or quasi-parallel, such that each bit of the data packet is assigned to a specific item of information and all bits are transferred simultaneously at data packet level, even if the data packet is transferred sequentially, that is to say if a bit is not assigned a fixed meaning and the transferred information is composed of the respective bits of a plurality of consecutively transferred data packets,
transmitting the first portion of the wheel information or a second portion of the wheel information by means of the information transfer apparatus (44, 36, 38), wherein the transmission takes place serially within the parallel or quasi-parallel transmission, wherein
the transmission of the first portion of the wheel information or a second portion of the wheel information by means of serial data transfer has the following steps:
transmitting an initial bit sequence, which indicates a data transfer start,
transmitting a type value, which indicates the data type to be transferred, and
transmitting a length value, which indicates a length of the data payload to be transferred.

8. The wheel information transfer method as claimed in the preceding method claim, wherein
the wheel information transfer apparatus is an active rotation speed sensor, and
the transmission of the first portion of the wheel information takes place by means of the AK protocol.

9. The wheel information transfer method as claimed in either of the preceding method claims, wherein the first portion of the wheel information is an air gap reserve, a signal amplitude validity, a direction of rotation validity, a direction of rotation or parity information, and the second portion of the wheel information is a sensor serial number, a component part temperature, a cipher key, customer information or sensor information.

10. The wheel information transfer method as claimed in any one of the preceding method claims, wherein the transmission of the first portion of the wheel information or the second portion of the wheel information takes place over one or more serial transfer channels.

11. The wheel information transfer method as claimed in the preceding method claim, wherein the transmission of the first portion of the wheel information or a second portion of the wheel information by means of serial data transfer further has the following steps:
transmitting a data payload of the length specified in the length value or
transmitting a check information item, in particular a CRC value.

12. The wheel information transfer method as claimed in any one of the preceding method claims, wherein the transmission of the first portion of the wheel information or a second portion of the wheel information by means of serial data transfer takes place in encoded form.

13. A motor vehicle, in particular a utility vehicle or heavy goods vehicle, having a wheel information transfer apparatus (10) as claimed in any one of the wheel information transfer apparatus claims.

## Revendications

1. Dispositif de transfert d'informations sur les roues (10) avec
un dispositif d'acquisition d'informations (26, 28, 44) qui est conçu pour acquérir ou enregistrer des informations relatives aux roues, et
un dispositif de transfert d'informations (44, 36, 38) qui est conçu pour transférer l'information relative aux roues par le biais d'un support de transfert,
dans lequel le dispositif de transfert d'informations est conçu pour transférer au moins une première partie des informations relatives aux roues en parallèle, de sorte que chaque bit d'un paquet de données est associé à une information déterminée et tous les bits sont transférés simultanément, ou quasiment en parallèle, de sorte que chaque bit du paquet de données est associé à une information déterminée et tous les bits sont transférés simultanément au niveau des paquets de données même lorsque le transfert du paquet de données se produit de manière séquentielle, c'est-à-dire lorsqu'un bit n'est associé à aucune signification fixe et que l'information transférée est constituée des bits respectifs de plusieurs paquets de données transférés consécutivement,
dans lequel le dispositif de transfert d'informations est conçu pour transférer en série cette première partie de l'information relative aux roues ou une seconde partie de l'information relative aux roues au sein du transfert de données parallèle ou quasiment parallèle, et
dans lequel le dispositif de transfert d'informations (44, 36, 38) est conçu pour effectuer le transfert de données en série de sorte qu'une séquence de transfert se compose d'une séquence de bits initiale qui indique un début de transfert de données, d'une valeur de type qui indique le type de données à transférer et d'une valeur de longueur qui indique une longueur de la charge utile de données à transférer.

2. Dispositif de transfert d'informations sur les roues (10) selon la revendication 1, dans lequel le dispositif de transfert d'informations sur les roues est un capteur de vitesse actif qui est conçu pour transférer la première partie de l'information sur les roues du protocole AK et transférer la première partie ou la seconde partie de l'information sur les roues.

3. Dispositif de transfert d'informations sur les roues (10) selon l'une quelconque des revendications précédentes, dans lequel la première partie de l'information sur les roues est une réserve d'entrefer, une validité d'amplitude de signal, une validité de direction de rotation, une direction de rotation ou une information sur la parité et la seconde partie de l'information sur les roues est un numéro de série de capteur, une température de composant, une clé de chiffrement, une information sur le client ou une information sur le capteur.

4. Dispositif de transfert d'informations sur les roues (10) selon l'une quelconque des revendications précédentes, dans lequel le dispositif de transfert d'informations sur les roues (44, 36, 38) est conçu pour transférer la première partie de l'information sur les roues ou la seconde partie de l'information sur les roues par le biais d'un ou plusieurs canaux de transfert en série.

5. Dispositif de transfert d'informations sur les roues (10) selon la revendication précédente, dans lequel le dispositif de transfert d'informations (44, 36, 38) est conçu pour effectuer le transfert de données en série de sorte qu'une séquence de transfert présente en outre une charge utile de données de la longueur indiquée dans la valeur de longueur ou une information de vérification en particulier une valeur de CRC.

6. Dispositif de transfert d'informations sur les roues (10) selon l'une quelconque des revendications précédentes, dans lequel le dispositif de transfert d'informations sur les roues (44, 36, 38) est conçu pour transférer en série et de manière chiffrée la première partie de l'information sur les roues ou la seconde partie de l'information sur les roues.

7. Dispositif de transfert d'informations sur les roues qui présente les étapes suivantes :
acquisition ou enregistrement d'une information sur les roues par le biais d'un dispositif d'acquisition d'informations (26, 28, 44) d'un dispositif de transfert d'informations sur les roues (10),
transmission d'une première partie de l'information relative aux roues au moyen d'un dispositif de transfert d'informations (44, 36, 38), dans lequel la transmission s'effectue en parallèle de sorte que chaque bit d'un paquet de données est associé à une information déterminée et que tous les bits sont transférés simultanément, ou quasiment en parallèle, de sorte que chaque bit du paquet de données est associé à une information déterminée et que tous les bits sont transférés simultanément au niveau de paquets de données même lorsque le transfert du paquet de données se produit de manière séquentielle, c'est-à-dire lorsqu'un bit n'est associé à aucune signification fixe et que l'information transférée est constituée des bits respectifs de plusieurs paquets de données transférés consécutivement,
transmission de la première partie de l'information sur les roues ou d'une seconde partie de l'information sur les roues au moyen du dispositif de transfert d'informations (44, 36, 38), dans lequel la transmission s'effectue en série au sein de la transmission parallèle ou quasiment parallèle, dans lequel
la transmission de la première partie de l'information sur les roues ou d'une seconde partie de l'information sur les roues au moyen d'un transfert de données en série présente les étapes de :
transmission d'une séquence de bits initiale qui indique un début de transfert de données,
transmission d'une valeur de type qui indique le type de données à transférer et
transmission d'une valeur de longueur qui indique une longueur de la charge utile de données à transférer.

8. Procédé de transfert d'informations sur les roues selon la revendication de procédé précédente, dans lequel
le dispositif de transfert d'informations sur les roues est un capteur de vitesse actif, et
la transmission de la première partie de l'information de roue s'effectue au moyen du protocole AK.

9. Dispositif de transfert d'informations sur les roues selon l'une quelconque des revendications précédentes, dans lequel la première partie de l'information sur les roues est une réserve d'entrefer, une validité d'amplitude de signal, une validité de direction de rotation, une direction de rotation ou une information sur la parité et la seconde partie de l'information sur les roues est un numéro de série de capteur, une température de composant, une clé de chiffrement, une information sur le client ou une information sur le capteur.

10. Procédé de transfert d'informations sur les roues selon l'une quelconque des revendications précédentes, dans lequel la détermination de la première partie de l'information sur les roues ou de la seconde partie de l'information sur les roues se produit par le biais d'un ou plusieurs canaux de transfert en série.

11. Procédé de transfert d'informations sur les roues selon la revendication précédente, dans lequel la transmission de la première partie de l'information sur les roues ou d'une seconde partie de l'information sur les roues au moyen d'un transfert de données en série présente les étapes de :
transmission d'une charge utile de données de la longueur indiquée dans la valeur de longueur ou transmission d'une information de vérification en particulier d'une valeur de CRC.

12. Procédé de transfert d'informations sur les roues selon l'une quelconque des revendications précédentes, dans lequel la détermination de la première partie de l'information sur les roues ou d'une seconde partie de l'information sur les roues se produit de manière chiffrée au moyen d'un transfert de données en série.

13. Véhicule à moteur, en particulier véhicule utilitaire ou camion avec un dispositif de transmission d'informations sur les roues (10) selon l'une quelconque des revendications de dispositif de transmission d'informations sur les roues.
